(19) Europäisches Patentamt

European Patent Office

Office européen des brevets

(11) **EP 0 860 302 B1**

(12) **EUROPEAN PATENT SPECIFICATION**

(45) Date of publication and mention
of the grant of the patent:
**29.10.2003 Bulletin 2003/44**

(51) Int Cl.⁷: **B60C 9/04**, B60C 9/00,
B60C 9/08

(21) Application number: **98301349.1**

(22) Date of filing: **24.02.1998**

(54) **Pneumatic tyre**

Luftreifen

Bandage pneumatique

(84) Designated Contracting States:
**DE FI GB**

(30) Priority: **25.02.1997 JP 4102297**

(43) Date of publication of application:
**26.08.1998 Bulletin 1998/35**

(73) Proprietor: **Sumitomo Rubber Industries Ltd.**
**Kobe-shi, Hyogo-ken (JP)**

(72) Inventors:
• **Komatsuki, Masato**
**Takasago-shi, Hyogo-ken (JP)**

• **Miyazaki, Shinichi**
**Kobe-shi, Hyogo-ken (JP)**

(74) Representative: **Stewart, Charles Geoffrey**
**Dunlop Tyres Ltd**
**Fort Dunlop, Erdington,**
**Birmingham B24 9QT (GB)**

(56) References cited:
**EP-A- 0 624 667          US-A- 4 374 977**

## Description

The present invention relates to a pneumatic tyre the carcass of which is made of cords having particular visco-elastic characteristics to provide improved running performance.

Pneumatic tyres for passenger cars, motorcycles and the like are usually provided with a carcass made of organic fibre cords such as nylon, polyester, rayon and the like for their light weight nature and to give good ride comfort.

In respect of tensile elastic modulus and dimensional stability against heating during tyre vulcanisation, rayon cords are superior to the others. Therefore, rayon cords are widely used as carcass cords especially for motorcycle tyres for which stability during running is extremely important. Rayon material however has problems with its high hygroscopic nature and waste water. Further, more recently high-powered machines demand evermore highly improved running performance from the tyre.

It is therefore, an object of the present invention to provide a pneumatic tyre in which running performance is improved to be better than conventional rayon tyre cords without the troublesome problems of the high hygroscopic property and waste water.

According to one aspect of the present invention, a pneumatic tyre comprises a tread portion, a pair of sidewall portions, a pair of bead portions, and a carcass ply made of cords extending between the bead portions, wherein each of the carcass cords has a complex elastic modulus $E^*$ (kgf) and loss factor $\tan \delta$ satisfying the following conditions:

$$\tan \delta > 0$$

$$\tan \delta \leq 0.001 \times E^* - 0.173$$

$$\tan \delta \leq -0.0003 \times E^* + 0.174$$

$$E^* \leq 340$$

under a temperature of 120 degrees C.

Preferably, the cords are aramid cords whose fineness is less than 1100 dtex/2.

An embodiment of the present invention will now be described in detail, by way of example only, in conjunction with the accompanying drawings in which:

Fig.1 is a cross sectional view of an embodiment of the present invention; and
Fig.2 is a graph showing a correlation of the visco-elastic characteristics of carcass cords and running performance of the tyre.

The pneumatic tyre according to the present invention comprises a tread portion 2, a pair of sidewall portions 3, a pair of bead portions 4 each with a bead core 5 therein, and a carcass 6 extending between the bead portions 4.

The tyre is a motorcycle tyre the tread 2 of which is curved continuously from one edge E to the other so that the maximum cross-sectional width TW of the tyre lies between the tread edges E. In this example, the tread 2 also has substantially a single radius of curvature.

The carcass 6 is composed of at least one ply 6A of cords arranged radially at an angle of 75 to 90 degrees to the tyre equator C. In this example, the carcass 6 is composed of a single ply 6A. On the radially outer side of the carcass 6, a jointless belt 7 is disposed, which is made of at least one cord wound spirally substantially parallel to the tyre equator C.

According to the present invention, each carcass cord has a complex elastic modulus $E^*$ (kgf/cord) and a loss factor $\tan \delta$ which satisfy the following conditions (1)-(4):

(1) $\tan \delta > 0$
(2) $\tan \delta \leq 0.001 \times E^* - 0.173$
(3) $\tan \delta \leq -0.0003 \times E^* + 0.174$
(4) $E^* \leq 340$

under a temperature of 120 degrees C.

It was believed that the visco-elastic character of carcass cords affects the tyre performance because the carcass cords embedded in the tyre are periodically subjected to tensile stress during running. The present inventors measured various tyre cords for visco-elastic characteristics, and various test tyres having those cords as carcass cords were tested for running performance. The correlation between the visco-elastic character and running performance was investigated. As a result, the inventors surprisingly discovered that a close correlation exists therebetween at a particular temperature of 120 degrees C. For the visco-elastic characteristics, the complex elastic modulus E* (kgf/cord) and loss factor tan δ were measured in the temperature range of from 10 to 150 degrees C, using a visco-elastic spectrometer under the following conditions:

| | |
|---|---|
| Initial tension | 450 g/cord |
| Frequency | 10 Hz |
| Dynamic distortion | plus/minus 0.03 % |
| Temperature increasing speed | 2 degrees C/minute |

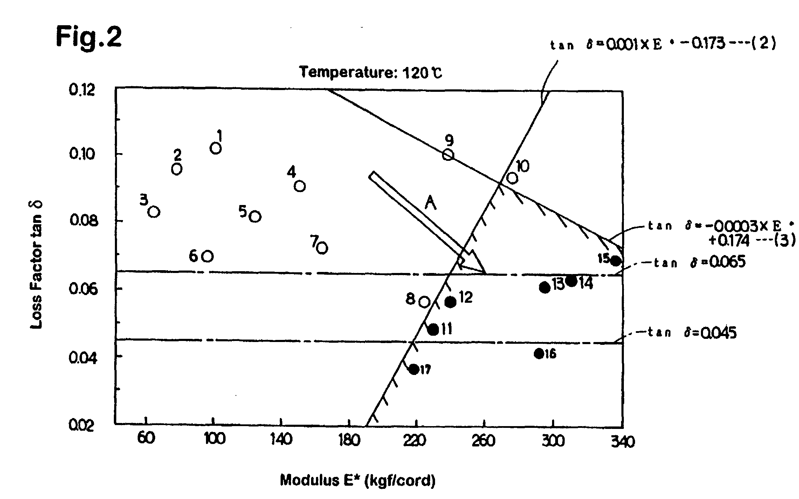

The results are shown in Fig.2, wherein cords Nos.1-10 plotted by small white circles were used as tyre cords, but cords Nos.11-14 plotted by black dots were not used. The specifications thereof were as follows.

Table 1

| Cord No. | Material | Fineness | Twist/10cm |
|---|---|---|---|
| 1 | PET(HMLS) | 1670 dtex/2 | |
| 2 | PET(ULS) | 1670 dtex/2 | |
| 3 | nylon 66 | 2100 dtex/2 | |
| 4 | polyarylate(*1) | 1670 dtex/2 | |
| 5 | vinyl on | 1670 dtex/2 | |
| 6 | vinyl on | 1330 dtex/2 | |
| 7 | PEN | 1670 dtex/2 | |
| 8 | rayon | 1840 dtex/2 | |
| 9 | aramid (*2) | 1670 dtex/2 | 55 |
| 10 | aramid (*2) | 1100 dtex/2 | 53 |
| 11 | aramid (*2) | 440 dtex/2 | 80 |
| 12 | aramid (*2) | 800 dtex/2 | 72 |
| 13 | aramid (*2) | 800 dtex/2 | 60 |
| 14 | aranid (*2) | 800 dtex/2 | 75 |
| 15 | aranid (*2) | 800 dtex/2 | 50 |
| 16 | aranid (*2) | 220 dtex/2 | 68 |
| 17 | aramid (*2) | 220 dtex/2 | 90 |

(*1) KURARAY VECTRAN
(*2) DUPONT KEVLAR

Before the invention it was believed that the running performance of a tyre could be improved by increasing the complex elastic modulus E* of the carcass cords. However, as the result of the above-mentioned tests and study by the present inventors, it was discovered that the loss factor tan δ of the carcass cords has also a great influence upon the running performance. For instance, cord No.8 (rayon 1840 dtex/2) had a lower complex elastic modulus E* but a higher running performance than the cord No.9 (aramid 1670 dtex/2), which overthrew the former knowledge. This result was explained as follows.

When the rayon cords were loaded, they elongated more easily than the aramid cords due to their relatively low complex elastic modulus E*, and then when the load decreased the rayon cords easily returned to the original state owing to their low hysteresis loss. In contrast, the aramid cords were hard to elongate due to their very high complex elastic modulus E*, and also were hard to return to the original state due to the high hysteresis loss. The easy returning nature of rayon cords is regarded as being more effectual on the running performance than the higher resistance to elongation of aramid cords. It is very important to the running performance that the elongation resistance and returning power of the carcass cords are designed in a well balanced manner.

Based on these concepts, the present inventors studied and discovered that it is necessary for improving the running performance to specifically define in certain ranges both the complex elastic modulus E* and loss factor tan $\delta$ of the carcass cords under a specific temperature of 120 degrees C.

In Fig.2, the arrow shows a direction (A) in which the tyre running performance was proved to improve when the stated cords were used as the carcass cords. This showed that the cords plotted lower right generally displayed better running performance.

The above-mentioned condition (2) defines a range in which a good running performance, which is better than the rayon cord No.8, was obtained. That is, the extent in the direction (A) is defined.

The above-mentioned condition (3) gives the upper limit of the loss factor tan $\delta$.

Condition (4) gives the realistic upper limit of the complex elastic modulus E*.

The aramid cord No.10 (1100 dtex/2, final & first twist=53 turns/10cm) had a relatively large loss factor tan $\delta$ although the complex elastic modulus was higher than the rayon cord No.8. When this aramid cord was used in a carcass, the stability of the tyre had a tendency to decrease, and a higher running performance than rayon cords was not obtained.

Cords Nos. 11 to 17 (black dots) were very fine aramid fibre cords whose fineness was less than 1100 dtex/2, for example 800 dtex/2, 440 dtex/2, 220 dtex/2 and the like.

By the use of such very fine aramid fibre cords, it became possible to obtain visco-elastic characteristics which satisfied the above-mentioned conditions (1) to (4).

If such very fine aramid fibres were twisted together into a cord by a large twist number, the elastic modulus was decreased and therefore it became too difficult to satisfy condition (2). On the contrary, when the twist number was too small, the loss factor increased and it became difficult to satisfy equation (3).

For example, when the fineness was 800 dtex/2, the twist number was preferably in the range of 50 to 75 (turns/10cm).

When the fineness was 440 dtex/2, the twist number was preferably in the range of 53 to 85.

When the fineness was 220 dtex/2, the twist number was preferably in the range of 57 to 95.

The first twist number through final twist number are preferably the same.

In case the of aramid fibre cords less than 1100 dtex/2 as above, the twist coefficient T is set in the range of 1.0 to 2.5, more preferably 1.9 to 2.5. Here, the twist coefficient T is

$$T = n \times \sqrt{\frac{D}{144}} \times 10^{-3}$$

wherein

1.44 is the specific gravity of aramid,
D is the total dtex number of a cord, and
n is the twist number (/10cm) of the cord.

If the twist coefficient T was less than 1.0, the cord fatigue resistance decreased. If the twist coefficient T was more than 2.5, it became difficult to satisfy the above-mentioned conditions (2) and (3).

By the above-mentioned condition (4), the complex elastic modulus E* is limited to a range of not more than 340 kgf/cord. In the case of motorcycles tyres, in order to obtain a good ground contact without deteriorating ride comfort, the modulus E* is more preferably set to be not more than 320 kgf/cord, still more preferably not more than 310 kgf/cord. The loss factor tan ░ Â is set in the range of 0.035 to 0.075, more preferably 0.045 to 0.065, still more preferably 0.05 to 0.06 to improve both the handling and tyre rigidity.

By using the aramid cords, the problems of high hygroscopic action and waste water can be solved.

Comparison Test

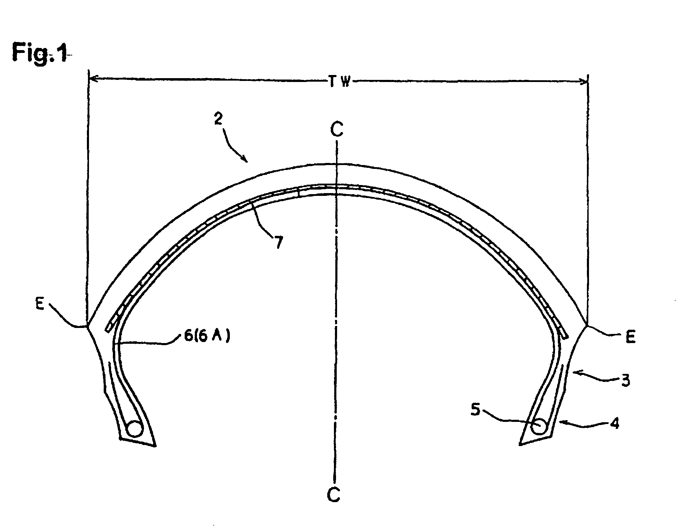

Test tyres (size 190/50ZR17) for motorcycles were made. The test tyres all had the same construction as shown in Fig.1 except for the carcass.

The test tyres were mounted on the rear wheel of a 900cc motorcycle of Japanese make, and the running performance such as handling, stability, ground contact, rigidity and ride comfort were evaluated into five ranks by the test rider's feeling.

Further, a durability test was carried out using a drum tester. The test tyres were run for 13,000 km at a speed of 65 km/h under a load of 450 kgf and an inner pressure of 225 KPa, and then the tyres were cut-open and inspected.

The tyre specifications and test results are shown in Table 2.

As described above, in the pneumatic tyres according to the present invention, as the carcass is made of novel cords satisfying the special conditions the running performance and durability were further improved in comparison with tyres whose carcass was made of conventional cords such as rayon cords.

Table 2

| Tyre | Prior | Ex.1 | Ex.2 | Ex 3 | Ex.4 | Ex.5 | Ex.6 | Ex.7 | Ref.1 | Ref.2 | Ref.3 | Ref.4 | Ref.5 | Ref.6 | Ref.7 | Ref.8 |
|---|---|---|---|---|---|---|---|---|---|---|---|---|---|---|---|---|
| Cord material | rayon | aramid | aramid | aramid | aramid | aramid | aramid | aramid | PE | vinylon | PEN | polyarylate | aramid | vinylon | polyarylate | aramid |
| fineness (dtex) | 1840/2 | 440/2 | 800/2 | 800/2 | 800/2 | 800/2 | 220/2 | 220/2 | 1670/2 | 1330/2 | 1670/2 | 1100/2 | 1100/2 | 1330/2 | 1100/2 | 1100/2 |
| Final twist (/10cm) | 48 | 80 | 60 | 72 | 57 | 50 | 90 | 68 | 40 | 38 | 40 | 53 | 53 | 60 | 60 | 60 |
| First twist (/10cm) | 48 | 80 | 60 | 72 | 57 | 50 | 90 | 68 | 40 | 38 | 40 | 53 | 53 | 60 | 60 | 60 |
| E* (kgf/cord) | 227 | 230 | 296 | 239 | 308 | 333 | 219 | 290 | 101 | 96 | 164 | 148 | 276 | 62 | 139 | 261 |
| tan δ | 0.055 | 0.048 | 0.06 | 0.056 | 0.063 | 0.069 | 0.038 | 0.043 | 0.102 | 0.069 | 0.071 | 0.089 | 0.093 | 0.058 | 0.086 | 0.09 |
| Condition (2)* | X | O | O | O | O | O | O | O | X | X | X | X | O | X | X | X |
| Condition (3)* | O | O | O | O | O | O | O | O | O | O | O | X | X | O | O | O |
| cord count (/5cm) | 51 | 36 | 36 | 36 | 36 | 36 | 40 | 40 | 50 | 36 | 22 | 20 | 30 | 36 | 36 | 36 |
| Handling | 3.8 | 4.2 | 4.5 | 4.3 | 4.5 | 4.2 | 4 | 4.3 | 3.7 | 3.7 | 3.8 | 3.7 | 3.8 | 3.6 | 3.6 | 3.7 |
| Stability | 4.2 | 4.4 | 4.6 | 4.4 | 4.5 | 4.2 | 4.1 | 4.3 | 3.8 | 4 | 4.1 | 3.8. | 4.1 | 3.9 | 3.7 | 4 |
| Ground contact | 3.8 | 4.2 | 4.3 | 4.3 | 4.3 | 4.1 | 4 | 4.1 | 3.3 | 3.6 | 3.6 | 3.6 | 3.7 | 3.8 | 3.6 | 3.8 |
| Rigidity | 3.8 | 4.1 | 4.4 | 4.1 | 4.4 | 4.3 | 4 | 4.3 | 3.5 | 3.6 | 3.7 | 3.5 | 3.7 | 3.4 | 3.4 | 3.8 |
| Ride comfort | 3.7 | 4.3 | 4.2 | 4.3 | 4.1 | 3.9 | 4.1 | 4. | 3.5 | 3.7 | 3.7 | 3.7 | 3.8 | 3.9 | 3.7 | 3.7 |
| Durability | good | good | good | good | good | good | good | good | good | poor | good | poor | good | good | poor | good |

EP 0 860 302 B1

6

**Claims**

1. A pneumatic tyre comprising a tread portion(2), a pair of sidewall portions (3), a pair of bead portions (4), and a carcass ply (6) made of cords extending between the bead portions, **characterised in that** each said cord has a complex elastic modulus E* (kgf) and loss factor tan δ satisfying

    tan δ > 0

    tan δ ≤ 0.001 x E* - 0.173

    tan δ ≤ -0.0003 x E* + 0.174

    E* ≤ 340

    at a temperature of 120 degrees C.

2. A pneumatic tyre according to claim 1, **characterised in that** said cords are aramid fibre cords.

3. A pneumatic tyre according to claim 1 or 2, **characterised in that** said cords have a fineness less than 1100 dtex/2.

4. A pneumatic tyre according to claim 1 or 2, **characterised in that** said cords have a fineness is more than 200 dtex/s but less than 1100 dtex/2.

5. A pneumatic tyre according to claim 3 or 4, **characterised in that** the twist coefficient

$$T = n \times \sqrt{\frac{D}{144}} \times 10^{-3}$$

    of the cords is in the range of 1.0 to 2.5, wherein

    1.44 is the specific gravity of aramid,
    D is the total dtex number of a cord, and
    n is the first and final twist number (/10cm) of the cord.


**Patentansprüche**

1. Luftreifen mit einem Laufstreifenabschnitt (2), einem Paar Seitenwandabschnitten (3), einem Paar Wulstabschnitten (4) und einer Karkasslage (6), die aus Korden hergestellt ist, die sich zwischen den Wulstabschnitten erstrecken, **dadurch gekennzeichnet, dass** jeder Kord einen komplexen Elastizitätsmodul E*(kgf) und einen Verlustfaktor tanδ aufweist, die bei einer Temperatur von 120°C die folgenden Bedingungen erfüllen:

    tanδ > 0
    tanδ ≤ 0,001 x E* - 0,173
    tanδ ≤ -0,0003 x E* + 0,174
    E* ≤ 340.

2. Luftreifen nach Anspruch 1, **dadurch gekennzeichnet, dass** die Korde Aramidfaserkorde sind.

3. Luftreifen nach Anspruch 1 oder 2, **dadurch gekennzeichnet, dass** die Korde eine Feinheit von weniger als 1100 dtex/2 aufweisen.

4. Luftreifen nach Anspruch 1 oder 2, **dadurch gekennzeichnet, dass** die Korde eine Feinheit aufweisen, die größer als 200 dtex/s aber kleiner als 1100 dtex/2 ist.

5. Luftreifen nach Anspruch 3 oder 4, **dadurch gekennzeichnet, dass** der Verdrehungskoeffizient

$$T = n \times \sqrt{\frac{D}{144}} \times 10^{-3}$$

der Korde im Bereich von 1,0 bis 2,5 liegt, wobei

1,44 das spezifische Gewicht von Aramid ist,
D die gesamte dtex-Zahl eines Kords ist und
n die erste und letzte Verdrehungszahl (/10 cm) des Kords ist.

**Revendications**

1. Pneumatique comprenant une partie de bande de roulement (2), une paire de parties (3) de flanc, une paire de parties (4) de talon et une nappe (6) de carcasse formée de câbles qui s'étendent entre les parties de talon, **caractérisé en ce que** chaque câble a un module complexe d'élasticité E*(kgf) et un facteur de perte tg$\delta$ tels que :

tg$\delta$ > 0
tg$\delta$ $\leq$ 0,001.E* - 0,173
tg$\delta$ $\leq$ - 0,0003.E* + 0,174
E* $\leq$ 340

à une température de 120 °C.

2. Pneumatique selon la revendication 1, **caractérisé en ce que** les câbles sont des câbles de fibres d'aramide.

3. Pneumatique selon la revendication 1 ou 2, **caractérisé en ce que** les câbles ont une finesse inférieure à 1 100 dtex/2.

4. Pneumatique selon la revendication 1 ou 2, **caractérisé en ce que** les câbles ont une finesse supérieure à 200 dtex/s mais inférieure à 1 100 dtex/2.

5. Pneumatique selon la revendication 3 ou 4, **caractérisé en ce que** le coefficient de torsion

$$T = n \times \sqrt{\frac{D}{144}} \times 10^{-3}$$

des câbles est compris entre 1,0 et 2,5, avec

1,44 désigne la densité d'aramide
D désigne le nombre total de décitex d'un câble, et
n désigne le premier nombre final de torsion (/10 cm) du câble.

**Fig.1**

EP 0 860 302 B1

# Fig.2